Europäisches Patentamt

(19) European Patent Office

Office européen des brevets

(11) Publication number : **0 508 720 A1**

(12) **EUROPEAN PATENT APPLICATION**

(21) Application number : **92303064.7**

(22) Date of filing : **07.04.92**

(51) Int. Cl.⁵ : **H02J 7/10**

(30) Priority : **09.04.91 GB 9107481**

(43) Date of publication of application :
**14.10.92 Bulletin 92/42**

(84) Designated Contracting States :
**AT BE CH DE DK ES FR GB GR IT LI LU MC NL PT SE**

(71) Applicant : **Yang, Tai-Her**
**5-1 Taipin Street**
**Si-Hu Town Dzan-Hwa (TW)**

(72) Inventor : **Yang, Tai-Her**
**5-1 Taipin Street**
**Si-Hu Town Dzan-Hwa (TW)**

(74) Representative : **Arthur, Bryan Edward et al**
**Withers & Rogers 4 Dyer's Buildings Holborn**
**London EC1N 2JT (GB)**

(54) **A close-loop controlled charging device with reference battery saturation status.**

㊜ A conventional charging device, in general, relates to charge the battery under the control through rated voltage method, rated current method, battery temperature rise detection method, etc. However, unless otherwises measuring the discharge capacity we are not likely to know exactly the residual power capacity the battery deposits. Under such a circumstance, the battery is often overcharged not only to waste power energy but shorten the life span of battery. The present invention relates to a close-loop charging device being thus controlled through timing measuring battery's internal resistance being provided to compare with reference value and indirectly measuring battery's saturation status whereby the user may determine to whether continue charging or not so as to avoid overcharging.

EP 0 508 720 A1

## SUMMARY OF THE INVENTION

A conventional charging device, in general, relates to charge the battery under the control through rated voltage method, rated current method, battery temperature rise detection method, etc. However, unless otherwises measuring the discharge capacity we are not likely to know exactly the residual power capacity the battery deposits. Under such a circumstance, the battery is often overcharged not only to waste power energy but shorten the life span of battery. The present invention relates to a close-loop charging device being thus controlled through timing measuring battery's internal resistance being provided to compare with reference value and indirectly measuring battery's saturation status whereby the user may determine to whether continue charging or not so as to avoid overcharging.

## BRIEF DESCRIPTION OF THE DRAWINGS

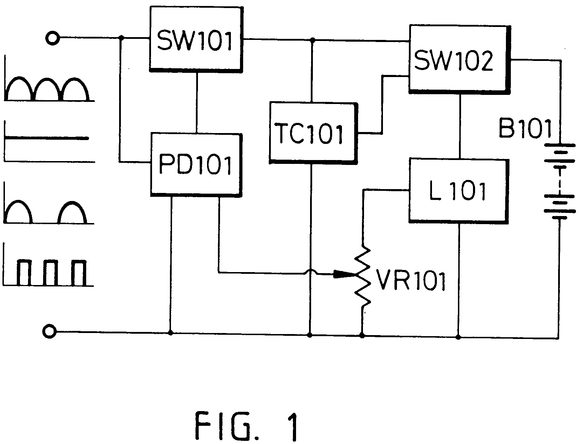

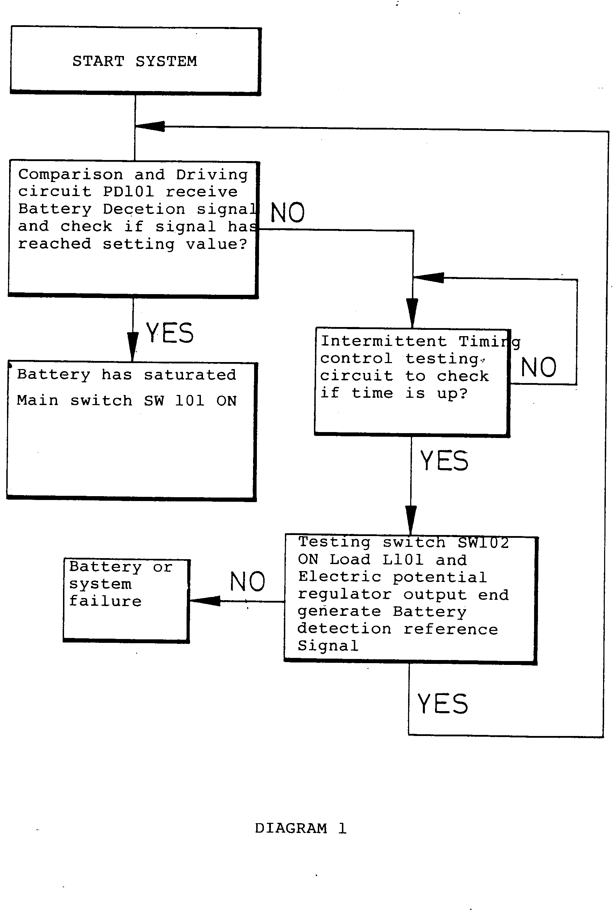

FIG. 1 is a diagram shwoing the principal circuit of a close-loop controlled charging device with reference battery saturation status of the present invention.

## DETAILED DESCRIPTION OF THE INVENTION

Accompanying the progress in our society, storage power source and movable power source have been widely applied to the vehicle, portable appliance, etc. in order to minimize pollution but promote economic efficiency and most of us have selected rechargeable battery or those with charging device. Over these years, a charging device is typically designed to include rated -voltage charge, rated-current charge, and timing cut-off as an auxiliary open loop, or battery temperature rise detection for cut-off, however a reasonable charging capacity is in failure to be accomplished since we can not exactly know the residual power capacity deposited in battery unless through measuring the discharge capacity. Under such a circumstance, the battery is often overcharged not only to waste power energy but shorten the life span of battery. The present invention relates to a close-loop charging device being thus controlled through timing measuring battery's internal resistance being provided to compare with reference value and indirectly measuring battery's saturation status whereby the user may determine to whether continue charging or not so as to avoid overcharging. As we know a relative ratio of bettery's internal resistance to its saturation status exists always. Therefore, with said device of the present invention we may have a charging device with reasonable charging time control function being better than the conventional device.

The following detailed specification is thus provided together with the accompanying drawings wherein:

Referring to FIG. 1, the principal circuit of close loop controlled charging device with reference battery saturation status comprising:

a DC power supply being controlled by main switch SW101 which is consisted of mechatronic or solid elements and acceptable by charging power being AC commutated or other DC power, and turns ON/OFF charging aga12t battery B101 whereby charging power supply is separated from battery; and operation and the intermittent timing-controlled testing circuit which switch off the main switch SW101 before the testing switch SW102 is closed;

a main battery B101 being provided to receive charging or not subject to the main switch SW101 control;

a testing switch SW102 being consisted of metratronic or solid elements, and being series connected testing load L101 first and then parallel connected to the ends of battery B101; testing switch being driven by intermittent testing circuit TC101, when the interval for intermittent timing-controlled testing switch SW102 is set up for disconnecting DC power supply with battery B101 and switching ON temporary load L101 for testing whereby each end of L101 appears testing drop signal; except being controlled by intermittent timing-controlled testing circuit, said testing switch being allowed for manual control;

an intermittent timing-controller testing circuit TC101 being provided to give command to switch off the main switch SW101 and to switch ON/OFF the testing switch SW102 intermittently subject to the invervals set up for the switch operation test;

an electric potential regulator VR101 being parallel connected to the ends of load L101, for O-return correction adjustment;

a testing load L101 being of resistance or having resistance induction or comprising of resistance series connected induction, or resistance series connected capacitance, or resistance, capacitance and induction jointly series connected, in order to form reference voltage at the ends of said testing load elements when testing switch SW102 is switched ON, and electric potential regulator VR101 would adjust reference signal of battery under charging status relative to reference voltage subject to the characteristics of battery;

a comparing and driving circuit PD101 being consisted of mechatronic or solid elements, which may operate main switch SW101 to switch OFF charging power supply to battery B101 when battery measuring reference signal has reached the value defined.

Aforesaid functions are based on the flow chart as Diagram 1 only when timing detection of battery's internal resistance is provided to determine for switching OFF charging under a saturation charge state.

The present invention relates to avoid overcharging against battery by means of switching OFF charging when battery being charged is timing measured to indicate internal resistance has reached the value relative to saturation status. Based on aforesaid principle, for practical application we are flexible to select analogical or digital type and allow such circuit being consisted of mechatronic relay or solid elements such as thyristor, power transistor and related electronic element/ circuit, or adopt such elements with comparison, time counting, selective control, reference value memory and setting functions through microprocessor.

To conclude above-mentioned descriptions, the close-loop controlled charging device with reference battery staturation status according to the present invention relates to have the function for switching OFF charging power once battery's internal resistance timing detection circuit has measured internal resistance of battery under charging status having dropped to the value defined relative to battery saturation status. Therefore, said battery automatic charging means is more accurate than the conventional arts of timing cut-off or over-temperature cut-off or end voltage comparison cut-off.

## Claims

1. A close-loop controlled charging device with reference battery saturation status through timing measuring battery's internal resistance being provided to compare with reference value and indirectly measuring battery's saturation status whereby the user may determine to whether continue charging or not so as to avoid overcharging, comprising:

   a DC power supply being controlled by main switch SW101 which is consisted of mechatronic or solid elements and acceptable by charging power being AC commutated or other DC power, and turns ON/OFF charging againt battery B101 whereby charging power supply is separated from battery; and operation and the intermittent timing-controlled testing circuit which switch off the main switch SW101 before the testing switch SW102 is closed;

   a main battery B101 being provided to receive charging or not subject to the main switch SW101 control;

   a testing switch SW102 being consisted of metratronic or solid elements, and being series connected testing load L101 first and then parallel connected to the ends of battery B101; testing switch being driven by intermittent testing circuit TC101, when the interval for intermittent timing-controlled testing switch SW102 is set up for disconnecting DC power supply with battery B101 and switching ON temporary load L101 for testing whereby each end of L101 appears testing drop signal; except being controlled by intermittent timing-controlled testing circuit, said testing switch being allowed for manual control;

   an intermittent timing-controller testing circuit TC101 being provided to give command to switch off the main switch SW101 and to switch ON/OFF the testing switch SW102 intermittently subject to the invervals set up for the Switch operation test;

   an electric potential regulator VR101 being parallel connected to the ends of load L101, for O-return correction adjustment;

   a testing load L101 being of resistance or having -resistance induction or comprising of resistance series connected induction, or resistance series connected capacitance, or resistance, capacitance and induction jointly series connected, in order to form reference voltage at the ends of said testing load elements when testing switch SW102 is switched ON, and electric potential regulator VR101 would adjust reference signal of battery under charging status relative to reference voltage subject to the characteristics of battery;

   a comparing and driving circuit PD101 being consisted of mechatronic or solid elements, which may operate main switch SW101 to switch OFF charging power supply to battery B101 when battery measuring reference signal has reached the value defined.

2. The close-loop controlled charging device with reference battery saturation status according to claim 1 wherein the circuit being permissibly an analogical or digital type and being consisted of mechatronic relay or solid elements such as thyristor, power transistor and related electronic element/ circuit, or having comparison, time counting, selective control, reference value memory and setting functions through a microprocessor.

FIG. 1

START SYSTEM

Comparison and Driving circuit PD101 receive Battery Decetion signal and check if signal has reached setting value?

NO

YES

Battery has saturated

Main switch SW 101 ON

Intermittent Timing control testing circuit to check if time is up?

NO

YES

Battery or system failure

NO

Testing switch SW102 ON Load L101 and Electric potential regulator output end generate Battery detection reference Signal

YES

DIAGRAM 1

5

European Patent Office

**EUROPEAN SEARCH REPORT**

Application Number

| DOCUMENTS CONSIDERED TO BE RELEVANT | | EP 92303064.7 |
|---|---|---|

| Category | Citation of document with indication, where appropriate, of relevant passages | Relevant to claim | CLASSIFICATION OF THE APPLICATION (Int. Cl.5) |
|---|---|---|---|
| A | US - A - 4 698 580 (YANG) * Abstract; column 1, lines 27-34; claims 1,3; fig. 1 * -- | 1,2 | H 02 J 7/10 |
| A | EP - A - 0 034 003 (REDIFON) * Page 6, lines 3-27; page 20, lines 9-22; claims 1,8; fig. 1 * -- | 1 | |
| A | US - A - 4 775 827 (IJNTEMA et al.) * Column 2, lines 10-45; fig. 6 * ---- | 2 | |
| | | | TECHNICAL FIELDS SEARCHED (Int. Cl.5) |
| | | | H 02 J |

The present search report has been drawn up for all claims

| Place of search | Date of completion of the search | Examiner |
|---|---|---|
| VIENNA | 15-07-1992 | MEHLMAUER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)